# EUROPÄISCHE PATENTSCHRIFT

(11) **EP 3 426 939 B1**
(45) Veröffentlichungstag und Bekanntmachung des Hinweises auf die Patenterteilung: **28.09.2022**
(21) Anmeldenummer: 17704428.6
(22) Anmeldetag: 07.02.2017
(51) Int. Cl.: F16D 48/06

(54) **VERFAHREN ZUR STEUERUNG UND/ODER REGELUNG EINER KUPPLUNG MIT EINEM REIBSYSTEM, INSBESONDERE EINER KUPPLUNG FÜR EIN AUTOMATISCHES ODER AUTOMATISIERBARES GETRIEBE EINES KRAFTFAHRZEUGS**
METHOD FOR CONTROLLING AND/OR REGULATING A CLUTCH WITH A FRICTION SYSTEM, PARTICULARLY A CLUTCH FOR AN AUTOMATIC OR AUTOMATABLE TRANSMISSION OF A MOTOR VEHICLE
PROCÉDÉ DE COMMANDE ET/OU DE RÉGULATION D'UN EMBRAYAGE COMPRENANT UN SYSTÈME DE FRICTION, EN PARTICULIER D'UN EMBRAYAGE POUR UNE BOÎTE DE VITESSES AUTOMATIQUE OU POUVANT ÊTRE AUTOMATISÉE D'UN VÉHICULE AUTOMOBILE

(30) Priorität: 07.03.2016 DE 102016203679
(43) Veröffentlichungstag der Anmeldung: 16.01.2019
(73) Patentinhaber: Volkswagen Aktiengesellschaft, 38440 Wolfsburg (DE)
(72) Erfinder: HOFMANN, Rainer, 38350 Helmstedt (DE); WALLEK, Volker, 38126 Braunschweig (DE); SALEWSKY, Stefan, 38116 Braunschweig (DE); BAMBACH, Sascha, 38126 Braunschweig (DE); HOFFMANN, Christian, 29389 Bad Bodenteich (DE)
(86) Internationale Anmeldenummer: PCT/EP2017/052582
(87) Internationale Veröffentlichungsnummer: WO 2017/153102

(56) Entgegenhaltungen:
- EP-A2- 0 759 513
- DE-A1- 3 624 755
- DE-A1-102008 053 542

## Beschreibung

Die Erfindung betrifft ein Verfahren zur Steuerung und/oder Regelung einer Kupplung mit einem Reibsystem gemäß den Merkmalen des Oberbegriffs des Patentanspruchs 1.

Über eine Kupplung kann ein Drehmoment von einem Motor auf ein Getriebe übertragen werden. Dabei kann insbesondere eine Motorwelle mit einer Kupplungseingangswelle der Kupplung und eine Kupplungsausgangswelle mit einer Getriebeeingangswelle verbunden sein. Zur Übertragung eines Drehmomentes weist die Kupplung ein Reibsystem, insbesondere entsprechende Kupplungsscheiben und/oder Lamellen auf. Insbesondere ist die Kupplung für ein automatisches oder automatisiertes Getriebe eines Kraftfahrzeuges ausgelegt und ein von der Kupplung übertragbares Kupplungsmoment ist einstellbar bzw. regelbar.

Aus der DE 195 44 061 A1 ist ein Verfahren zur Regelung von Kupplungen für Automatikgetriebe bekannt, in dem zur Erkennung einer Haft- beziehungsweise einer Gleitgrenze eines druckmittelbetriebenen Schaltelementes oder eines Stellgliedes ein Ansteuersignal für ein, einen Betätigungsdruck einstellendes Ventil mit einem Moduliersignal überlagert wird.

Aus der DE 10 2007 053 706 A1 ist ein Verfahren zur Steuerung einer Kupplung bekannt, in dem mindestens ein Temperaturgradient in einer Kupplungsplatte bestimmt wird und aufgrund der ermittelten Daten und/oder eines Temperaturmodells ein aktuelle Stellkennlinie in Abhängigkeit einer bereits abgespeicherten Kennlinie zur Steuerung der Kupplung bestimmt wird.

Aus der DE 10 2008 053 452 A1 ist ein Verfahren zur Steuerung einer Kupplung bekannt, bei dem mittels einer Steuereinheit ein Schlupfvergleich durchgeführt wird. Ein Ist-Schlupf wird mit mindestens einem Schlupf-Schwellwert verglichen. In Abhängigkeit des Schlupf-Vergleichs wird eine Bewertungskennzahl verändert, wobei in Abhängigkeit der Bewertungskennzahl der SollSchlupf adaptiert wird.

Die im Stand der Technik bekannten Verfahren zur Steuerung und/oder Regelung einer Kupplung sind jedoch noch nicht optimal ausgebildet. So führen die im Stand der Technik bekannten Verfahren zur Steuerung und/oder Regelung manchmal, insbesondere bei Sonderzuständen des Reibsystems, nicht zu optimalen Ergebnissen, beispielsweise im Hinblick auf den Benutzerkomfort. Zudem sind die im Stand der Technik bekannten Verfahren zur Steuerung und/oder Regelung einer Kupplung meist sehr aufwändig. Zudem erfordern die im Stand der Technik bekannten Verfahren zur Steuerung und/oder Regelung einer Kupplung meistens zusätzliche und/oder kostenintensive Mittel, wie Steuer-, Regel-, Sensor- und/oder Auswertetechniken.

Der Erfindung liegt daher die Aufgabe zu Grunde, das eingangs genannte Verfahren nun derart auszugestalten und weiterzubilden, dass dieses auf einfache und kostengünstige Weise, insbesondere ohne zusätzliche Mittel verbessert und dabei insbesondere der Benutzerkomfort erhöht ist.

Die der Erfindung zugrunde liegende Aufgabe wird nun für das eingangs genannte Verfahren mit den Merkmalen des Patentanspruchs 1 gelöst.

Dabei wird in dem Verfahren, wenn eine Veränderung des Reibsystems erkannt wird, welche sich dadurch äußert, dass der Ist-Schlupf zunächst einen Grenzwert für einen maximal zulässigen Maximalschlupf überschreitet und der Ist-Schlupf dann für einen bestimmten Mindest-Zeitraum kleiner als ein bestimmter Sollschlupf wird, eine an die Veränderung des Reibsystems angepasste Steuerungs- und/oder Regelungsstrategie aktiviert.

Eine sich derart äußernde Veränderung des Reibsystems kann beispielsweise auf einer Änderung im Reibwertverhalten des tribologischen Systems der Kupplung, welche unter bestimmten äußeren Bedingungen, wie nassem und/oder kaltem Wetter und/oder bei Verschmutzung und/oder Verschleiß von Reibbelägen auftreten kann, beruhen. Durch die an die Veränderung des Reibsystems angepasste Steuerungs- und/oder Regelungsstrategie können Rausdreher der Motordrehzahl mit anschließender Haftung, welche ab einer bestimmten Amplitude als Längsschwingung beziehungsweise Längsruckeln für den Fahrer des Kraftfahrzeuges spürbar sein können, behoben und/oder vermieden werden. Auf diese Weise kann der Benutzerkomfort, insbesondere der Fahrkomfort verbessert werden. Da die Steuerungs- und/oder Regelungsstrategie insbesondere geändert wird, wenn ein Problem in der Schlupfregelung bzw. eine Veränderung des Reibsystems/ein "Sonderzustand" erkannt wird, bleiben die Vorteile der nicht angepassten Steuerungs- und/oder Regelungsstrategie und das Verhalten des Getriebes im "In-Ordnung-Zustand" des Reibsystems erhalten. Zur Anpassung der Steuerungs- und/oder Regelungsstrategie kann insbesondere lediglich eine "neue Bedatung" durchgeführt werden. Zur Erkennung der Veränderung des Reibsystems können herkömmliche Serienparameter, wie die Getriebeeingangswellendrehzahl und/oder die Motordrehzahl, genutzt werden. Auf eine Verwendung zusätzlicher und/oder teuerer Steuer-, Regel-, Sensor- und/oder Auswertetechniken und -mittel kann dabei verzichtet werden.

Im Rahmen einer Ausgestaltung der Erfindung wird im Rahmen der angepassten Steuerungs-und/oder Regelungsstrategie der bestimmte Sollschlupf, insbesondere verglichen mit dem bestimmten Sollschlupf in einem In-Ordnung-Zustand des Reibsystems, dann erhöht. Im Rahmen der angepassten Steuerungs- und/oder Regelungsstrategie kann dabei insbesondere eine für die Veränderung des Reibsystems spezifische Reibwert-Schlupf-Kennlinie verwendet werden. Bei der spezifischen Reibwert-Schlupf-Kennlinie kann insbesondere der Reibwert mit steigendem Schlupf abfallen. Insbesondere kann im Rahmen der angepassten Steuerungs-und/oder Regelungsstrategie der bestimmte Sollschlupf derart erhöht werden, dass der erhöhte bestimmte Sollschlupf in einem Bereich der spezifischen Reibwert-Schlupf-Kennlinie liegt, in welchem der Abfall des Reibwertes über Schlupf möglichst gering ist. Die spezifische Reibwert-Schlupf-Kennlinie kann dabei insbesondere in einem Steuergerät abgespeichert sein.

Im Rahmen einer weiteren, alternativen oder zusätzlichen Ausgestaltung der Erfindung wird im Rahmen der angepassten Steuerungs- und/oder Regelungsstrategie bei der Kupplung ein Haftungszustand realisiert, insbesondere eine "Überanpressung" der Kupplung eingestellt bzw. die Kupplung in einer "Überanspressung" gefahren. Dabei kann beispielsweise die Kupplung dadurch in einer Überanpressung gefahren werden, dass die Kupplung auf ein Kupplungsmoment eingestellt wird, welches, insbesondere deutlich, größer als das zu übertragende Drehmoment, insbesondere das Motordrehmoment, ist. Beispielsweise kann die Kupplung auf ein Kupplungsmoment eingestellt werden, welches um mindestens 50 % größer als das zu übertragende Drehmoment, insbesondere das Motordrehmoment, ist. Zum Beispiel kann die Kupplung bei einem zu übertragenden Drehmoment, insbesondere Motordrehmoment, von etwa 500 Nm auf ein Kupplungsmoment von etwa 800 Nm eingestellt werden.

Im Rahmen einer weiteren, alternativen oder zusätzlichen Ausgestaltung der Erfindung wird im Rahmen der angepassten Steuerungs- und/oder Regelungsstrategie der Ist-Schlupf an den bestimmten Sollschlupf mit einem, insbesondere verglichen mit einem In-Ordnung-Zustand des Reibsystems, betragsmäßig verringerten zeitlichen Gradienten herangeführt.

Die angepasste Steuerungs- und/oder Regelungsstrategie kann insbesondere nach einem bestimmten Anpassungszeitraum und/oder beim Erreichen einer bestimmten Temperatur der Kupplung und/oder ab einer bestimmten Leistung wieder deaktiviert werden. Insbesondere kann die Überanpressung der Kupplung nach einem bestimmten Anpassungszeitraum und/oder beim Erreichen einer bestimmten Temperatur der Kupplung und/oder ab einer bestimmten Leistung wieder aufgehoben beziehungsweise abgeschaltet werden. Wenn dann die Veränderung im Reibsystem erneut erkannt wird, kann die angepasste Steuerungs- und/oder Regelungsstrategie, beispielsweise die Überanpressung der Kupplung, wieder aktiviert werden.

Eine Veränderung des Reibsystems kann insbesondere dann erkannt werden, wenn der Ist-Schlupf, insbesondere in einem bestimmten Analysezeitraum, insbesondere mehrfach, beispielsweise mindestens zweifach oder dreifach, zunächst den Grenzwert für den maximal zulässigen Maximalschlupf überschreitet und danach für einen bestimmten Mindest-Zeitraum kleiner als der bestimmte Sollschlupf wird. Diese Abfolge/Sequenz/Periode tritt bei einem veränderten Sonderzustand des Reibsystems insbesondere zumindest zweifach, vorzugsweise mehrfach, hintereinander auf. So kann ein derartiger veränderter Sonderzustand des Reibsystems besonders zuverlässig erkannt werden.

Der Ist-Schlupf der Kupplung kann zum Beispiel anhand, insbesondere der Differenz der Kupplungseingangswellendrehzahl beziehungsweise Motordrehzahl und der Kupplungsausgangswellendrehzahl beziehungsweise Getriebeeingangswellendrehzahl bestimmt werden. Insbesondere kann der Ist-Schlupf anhand der Motordrehzahl und der Getriebeeingangswellendrehzahl bestimmt werden. Diese Drehzahlen werden in der Regel ohnehin serienmäßig ermittelt. Die Motordrehzahl kann insbesondere durch einen Motordrehzahlsensor bestimmt werden. Die Getriebeeingangswellendrehzahl kann insbesondere durch einen Getriebeeingangswellendrehzahlsensor bestimmt werden.

Der bestimmte Sollschlupf der Kupplung kann zum Beispiel etwa 10 bis 15 U/min betragen. Beispielsweise kann ein bestimmter unterer Grenzwert für den Sollschlupf zum Erkennen einer Veränderung, insbesondere also der untere Grenzwert für den Sollschlupf beziehungsweise ein bestimmter Grenzwert etwa 10 U/min betragen.

Der Grenzwert für den maximal zulässigen Maximalschlupf kann insbesondere um ein mehrfaches, beispielsweise um mindestens ein zehnfaches, zum Beispiel um ein fünfzehnfaches, größer als der bestimmte Sollschlupf und/oder der Grenzwert für den Sollschlupf zum Erkennen einer Veränderung sein. Zum Beispiel kann der Grenzwert für den maximal zulässigen Maximalschlupf etwa 150 U/min betragen.

In dem bestimmten Mindest-Zeitraum kann der Ist-Schlupf insbesondere gleich null werden und/oder die Kupplung in Haftreibung gehen. Dabei kann insbesondere die Motordrehzahl gleich der Getriebeeingangswellendrehzahl werden bzw. sein, insbesondere wenn die Kupplung in Haftreibung ist.

Das Verfahren kann insbesondere zur Steuerung und/oder Regelung einer Kupplung mit einem Reibsystem, insbesondere mit Schlupf, für ein automatisches oder automatisierbares Getriebe für ein Kraftfahrzeug, insbesondere für eine Doppelkupplung beziehungsweise für ein Doppelkupplungsgetriebe eines Kraftfahrzeug, ausgelegt sein.

Die eingangs genannten Nachteile sind daher vermieden und entsprechende Vorteile sind erzielt.

Es gibt nun eine Vielzahl von Möglichkeiten, das erfindungsgemäße Verfahren in vorteilhafter Art und Weise auszugestalten und weiterzubilden. Hierfür darf zunächst auf die dem Patentanspruch 1 nachgeordneten Patentansprüche verwiesen werden. Im Folgenden werden nun anhand der Zeichnung und der dazugehörigen Beschreibung Parameter eines Reibsystem in einem "In-Ordnung-Zustand" und in einem veränderten "Sonderzustand", bei dem gemäß des erfindungsgemäßen Verfahrens eine angepasste Steuerungs- und/oder Regelungsstrategie aktiviert wird, veranschaulicht, wobei bevorzugte Ausgestaltungen des erfindungsgemäßen Verfahrens näher erläutert werden. In der Zeichnung zeigt:

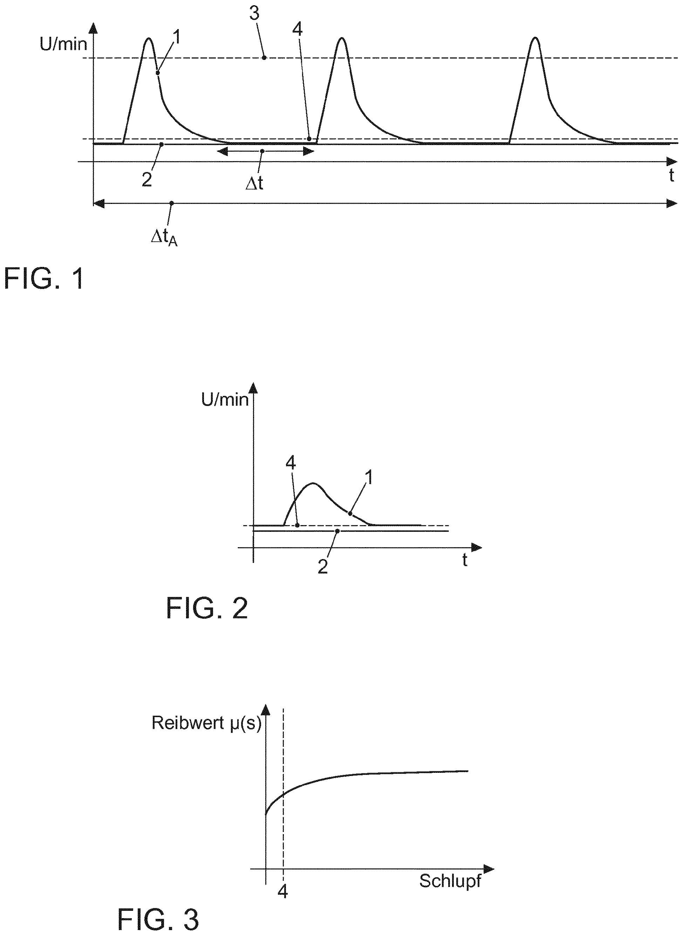

- Fig. 1: in schematischer Darstellung einen Graphen, in dem die Motordrehzahl und die Getriebeeingangswellendrehzahl gegen die Zeit aufgetragen sind, nämlich einen Drehzahlverlauf eines Reibsystems in einem veränderten Sonderzustand,
- Fig. 2: in schematischer Darstellung einen Graphen, in dem die Motordrehzahl und die Getriebeeingangswellendrehzahl gegen die Zeit aufgetragen sind, nämlich einen Drehzahlverlauf eines Reibsystems in einem In-Ordnung-Zustand,
- Fig. 3: in schematischer Darstellung einen Graphen, in dem allgemein der Verlauf eines Reibwertes gegen einen Schlupf aufgetragen ist, nämlich eine Reibwert-Schlupf-Kennlinie und einen bestimmten Sollschlupf eines Reibsystems in einem In-Ordnung-Zustand,

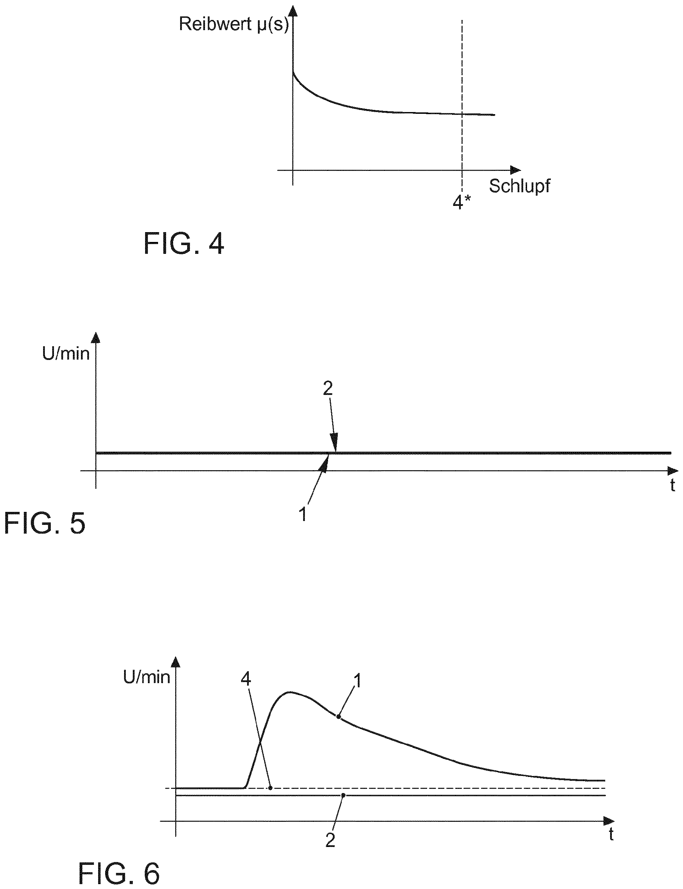

- Fig. 4: in schematischer Darstellung einen Graphen, in dem allgemein der Verlauf eines Reibwertes gegen einen Schlupf aufgetragen ist, nämlich eine für ein Reibsystem in einem (veränderten) Sonderzustand spezifische Reibwert-Schlupf-Kennlinie sowie einen erhöhten bestimmten Sollschlupf gemäß einer Ausgestaltung des erfindungsgemäßen Verfahrens,
- Fig. 5: in schematischer Darstellung einen Graphen, in dem die Motordrehzahl und die Getriebeeingangswellendrehzahl gegen die Zeit aufgetragen sind, nämlich einen Drehzahlverlauf eines Reibsystems im (veränderten) Sonderzustand, bei dem gemäß einer weiteren Ausgestaltung des erfindungsgemäßen Verfahrens die Kupplung in einer "Überanpressung" gefahren wird bzw. ein im Wesentlichen vollständiger Haftungszustand der Kupplung realisiert wird, und
- Fig. 6: in schematischer Darstellung einen Graphen, in dem die Motordrehzahl und die Getriebeeingangswellendrehzahl gegen die Zeit aufgetragen sind, nämlich einen Drehzahlverlauf eines Reibsystems in einem (veränderten) Sonderzustand, bei dem gemäß einer weiteren Ausgestaltung des erfindungsgemäßen Verfahrens ein zeitlicher Gradient, mit welchem der Ist-Schlupf an den bestimmten Sollschlupf herangeführt wird, betragsmäßig verringert wurde bzw. ist (im Vergleich zu Fig. 2).

Fig. 1 veranschaulicht, dass im Fall einer Veränderung eines Reibsystems einer Kupplung, beispielsweise durch nasse beziehungsweise feuchte, kalte, verschmutzte und/oder verschlissene Reibbeläge oder Lamellen, ein Ausgleich von Schwankungen der Motordrehzahl durch eine Steuerung beziehungsweise Regelung der Kupplung beeinträchtigt und/oder komplexer/aufwändiger werden kann. Wird bei einem derartig, insbesondere im Vergleich zum "In-Ordnung-Zustand" veränderten Sonderzustand nun ein Kupplungsmoment der Kupplung gesteuert und/oder geregelt, insbesondere zunächst ein bestimmtes Kupplungsmoment eingestellt, kann es zu einem starken Anstieg der Motordrehzahl 1 kommen und es vergrößert sich der Ist-Schlupf, so dass die Motordrehzahl 1 noch weiter ansteigt, was auch als "Rausdreher" bezeichnet wird. Um die Motordrehzahl 1 wieder nach unten zu ziehen, muss die Anpresskraft der Kupplung erhöht werden. Ab einer gewissen Anpresskraft der Kupplung verringert sich dann der Ist-Schlupf und die erhöhte Motordrehzahl 1 wird wieder, insbesondere mit einem betragsmäßig hohen Gradienten, nach unten gezogen, wobei dann schließlich für einen, insbesondere längeren, Zeitraum beziehungsweise eine Zeitspanne der Ist-Schlupf insbesondere null wird und die Kupplung in Haftreibung geht, wobei die Motordrehzahl 1 dann im Wesentlichen der Getriebeeingangswellendrehzahl 2 entspricht. Ab einer bestimmten Amplitude können derartige "Rausdreher-Haftreibungs-Abfolgen" als Längsschwingung spürbar sein. Im Rahmen des erfindungsgemäßen Verfahrens wird durch ein Auftreten dieses Phänomens eine Veränderung des Reibsystems erkannt und eine an die Veränderung des Reibsystems angepasste Steuerungs- und/oder Regelungsstrategie aktiviert.

Fig. 1 illustriert, dass sich die Veränderung des Reibsystems dadurch äußert bzw. erkannt werden kann, dass der Ist-Schlupf der Kupplung zunächst einen Grenzwert für einen maximal zulässigen Maximalschlupf 3 überschreitet und dann für einen bestimmten Mindest-Zeitraum Δt kleiner als ein bestimmter Sollschlupf 4 wird.

Allgemein darf insbesondere zu der Darstellung der Figuren und den dortigen Linien folgendes ausgeführt bzw. auf folgendes hingewiesen werden: Der Ist-Schlupf wird errechnet beziehungsweise ermittelt aus der Differenz der Motordrehzahl 1 und der Getriebeeingangswellendrehzahl 2. Der maximal zulässige Maximalschlupf der Kupplung ist entsprechend bestimmt bzw. festgelegt, wobei ein Grenzwert 3 für den maximal zulässigen Maximalschlupf als gestrichelte Linie in Fig. 1 eingezeichnet ist und für die Darstellung in Fig. 1 insbesondere gilt: Grenzwert 3 = Getriebeeingangswellendrehzahl 2 + bestimmter maximal zulässiger Maximalschlupf. Der bestimmte Sollschlupf ist ebenfalls bestimmt bzw. festgelegt, wobei dessen Grenzwert 4 in Fig. 1 - sowie in den später erläuterten Figuren 2 und 6 - entsprechend als gestrichelte Linie eingezeichnet ist und im Wesentlichen gilt: Grenzwert 4 = Getriebeeingangswellendrehzahl 2 + bestimmter Sollschlupf.

Wenn in Fig. 1 die Motordrehzahl 1 hier - insbesondere bei im Wesentlichen konstanter Getriebeeingangswellendrehzahl 2 - den durch die gestrichelte Linie dargestellten Grenzwert 3 überschreitet, wird damit der maximal zulässige Maximalschlupf der Kupplung überschritten, wobei wenn die Motordrehzahl 1 hier den durch die weitere gestrichelte Linie dargestellten Grenzwert 4 unterschreitet, wird damit der zuvor festgelegte bestimmte Sollschlupf 4 entsprechend unterschritten. In dem bestimmten Mindest-Zeitraum Δt kann der Schlupf insbesondere gleich null beziehungsweise die Motordrehzahl 1 gleich der Getriebeeingangswellendrehzahl 2 werden und die Kupplung in Haftreibung gehen. Eine derartige Veränderung des Reibsystem kann sich insbesondere dadurch äußern, dass sich eine derartige Sequenz aus einer Überschreitung des Maximalschlupfes 3 (Rausdreher) und einer nachfolgenden Unterschreitung des bestimmten Sollschlupfes 4 (Haftreibung), insbesondere in einem bestimmten Analysezeitraum Δt_{A}, nämlich eine bestimmte Anzahl von Malen entsprechend wiederholt, insbesondere zumindest zweifach vorkommt. Insbesondere kann daher eine Veränderung des Reibsystems dann erkannt werden, wenn - insbesondere in einem bestimmten Analysezeitraum Δt_{A} - der Ist-Schlupf zunächst den Grenzwert für den maximal zulässigen Maximalschlupf 3 überschreitet und dann für den bestimmten Mindest-Zeitraum Δt kleiner als der bestimmte Sollschlupf 4 wird und diese Sequenz sich mehrfach wiederholt, insbesondere diese Sequenz zumindest zweifach vorkommt.

Fig. 2 veranschaulicht, dass bei einem Reibsystem in einem In-Ordnung-Zustand, beispielsweise mit trocknen, wohltemperierten, sauberen und unverschlissenen Reibbelägen oder Lamellen, bei einem Anstieg der Motordrehzahl 1 ein bestimmtes Kupplungsmoment eingestellt wird, insbesondere die Anpresskraft der Kupplung erhöht, auf diese Weise dann der Ist-Schlupf verringert und die Motordrehzahl 1 nach unten gezogen werden kann. Im Gegensatz zu dem im Zusammenhang mit Fig. 1 beschriebenen (in Fig. 1 gezeigten und veränderten) Sonderzustand wird so einerseits ein geringerer Anstieg der Motordrehzahl 1 erzielt, wobei die Schwankungen der Motordrehzahl 1 relativ gering sind, insbesondere in einem bestimmten geringen Breitenband gehalten werden. Andererseits wird bei einem Reibsystem in einem In-Ordnung-Zustand gemäß der Fig. 2 - im Gegensatz zu dem im Zusammenhang mit Fig. 1 beschriebenen (veränderten) Sonderzustand - der Ist-Schlupf lediglich bis auf den bestimmten Sollschlupf 4 nach unten gezogen beziehungsweise wird die Motordrehzahl 1 hier - insbesondere bei im Wesentlichen konstanter Getriebeeingangswellendrehzahl 2 - auf den in Fig. 2 durch die gestrichelte Linie dargestellten Grenzwert 4 nach unten gezogen. Im In-Ordnung-Zustand des Reibsystems geht der Ist-Schlupf folglich nicht für einen längeren Zeitraum bis auf null zurück und die Kupplung geht nicht in Haftreibung.

Fig. 3 zeigt eine Reibwert-Schlupf-Kennlinie für ein Reibsystem in einem In-Ordnung-Zustand und veranschaulicht, dass bei einem Reibsystem in einem In-Ordnung-Zustand der Reibwert mit steigendem Schlupf zunächst, insbesondere stark, ansteigt bevor dieser danach im Wesentlichen konstant beziehungsweise nur noch leicht steigend verläuft. Der bestimmte Sollschlupf 4 für das Reibsystem im In-Ordnung-Zustand liegt dabei bei einem geringen Schlupf in einem Bereich der Reibwert-Schlupf-Kennlinie, in welchem der Reibwert über Schlupf relativ stark ansteigt. Dadurch, dass der Reibwert bei einem Reibsystem in einem In-Ordnung-Zustand mit steigendem Schlupf ansteigt wird eine stabile Schlupfregelung unterstützt.

Fig. 4 zeigt eine für einen (im Vergleich zum In-Ordnung-Zustand veränderten) Sonderzustand eines Reibsystems spezifische Reibwert-Schlupf-Kennlinie und veranschaulicht, dass bei einem Reibsystem im (veränderten) Sonderzustand der Reibwert mit steigendem Schlupf zunächst, insbesondere stark, abfällt bevor dieser danach im Wesentlichen konstant beziehungsweise nur noch leicht abfallend verläuft.

Aus der Zusammenschau der Fig. 3 und 4 ist ersichtlich, dass der bestimmte Sollschlupf 4 in Fig. 4 unter Berücksichtigung des in Fig. 3 gezeigten Reibsystems (im In-Ordnung-Zustand) in einem besonders stark abfallenden Bereich der in Fig. 4 dargestellten, für den (veränderten) Sonderzustand spezifischen Reibwert-Schlupf-Kennlinie läge. Es hat sich jedoch herausgestellt, dass gerade dies einer stabilen Steuerung und/oder Regelung entgegen wirkt und hierdurch das im Zusammenhang mit Fig. 1 erläuterte Phänomen von "Rausdreher-Haftreibungs-Abfolgen" gefördert wird.

Fig. 4 veranschaulicht nun, dass im Rahmen einer Ausgestaltung der angepassten Steuerungs-und/oder Regelungsstrategie der bestimmte Sollschlupf 4* - insbesondere verglichen mit dem bestimmten Sollschlupf 4 für das Reibsystem im In-Ordnung-Zustand - erhöht wird bzw. ein hierfür erforderliches Kupplungsmoment an der Kupplung dann eingestellt wird. Dabei wird der erhöhte, bestimmte Sollschlupf 4* in einen weniger stark abfallenden, insbesondere konstanten beziehungsweise nur noch leicht abfallenden Bereich der für den (veränderten) Sonderzustand spezifischen Reibwert-Schlupf-Kennlinie entsprechend verschoben. Insbesondere kann dabei der Sollschlupf 4 deutlich erhöht werden. Beispielsweise kann der Sollschlupf 4 auf einen bestimmten Sollschlupf 4* derart erhöht werden, so dass in dem Bereich, in dem der Abfall des Reibwertes am größten ist, dann bei der Kupplung kein dauerhafter Schlupf gefahren wird. So können Steuerungs- bzw. Regelungsprobleme, welche mit einem stark abfallenden Reibwert einhergehen, bei dem (veränderten) Sonderzustand des Reibsystems vermieden werden. Da bei einem höheren Sollschlupf 4* der Abfall des Reibwertes bei steigendem Schlupf wie in Fig. 4 dargestellt nicht mehr so groß ist, kann die Steuerung/Regelung mit dem erhöhten, bestimmten Sollschlupf 4* wieder stabil arbeiten. Insbesondere können so Steuerungs-/Regelungsprobleme bei einem Übergang vom Haften ins Gleiten bei Reibsystemen, welche einen höheren Haftreibwert als Gleitreibwert aufweisen, vermieden werden, da durch eine deutlich erhöhte Schlupfdrehzahl ein Übergang ins Haften vermieden und somit die Steuerung/Regelung beeinträchtigende und gegebenenfalls auch spürbare Übergänge zwischen Haften und Gleiten vermieden werden können. So kann das im Zusammenhang mit Fig. 1 erläuterte Phänomen von "Rausdreher-Haftreibungs-Abfolgen" verringert beziehungsweise vermieden werden. Wie in Fig. 4 veranschaulicht, wird dabei im Rahmen der angepassten Steuerungs- und/oder Regelungsstrategie der bestimmte Sollschlupf 4 vorzugsweise derart erhöht wird, dass der erhöhte, bestimmte Sollschlupf 4* in einen Bereich der spezifischen Reibwert-Schlupf-Kennlinie liegt, in welchem der Abfall des Reibwertes über Schlupf möglichst gering ist.

Im Rahmen einer weiteren Ausgestaltung der angepassten Steuerungs- und/oder Regelungsstrategie wird ein Haftungszustand der Kupplung realisiert, insbesondere die Kupplung in einer Überanpressung gefahren. Wie in Fig. 5 dargestellt, wird durch eine derartige Überanpressung die Motordrehzahl 1 gleich der Getriebeeingangswellendrehzahl 2. Dies kann beispielsweise dadurch bewirkt werden, dass die Kupplung auf ein Kupplungsmoment eingestellt wird, welches deutlich größer, zum Beispiel um mindestens 50 % größer, als das zu übertragende Drehmoment, insbesondere das Motordrehmoment, ist. Zum Beispiel kann die Kupplung bei einem Motordrehmoment von etwa 500 Nm auf ein Kupplungsmoment von etwa 800 Nm eingestellt werden. So wird eine Schlupfregelung durch die Kupplung deaktiviert und die Kupplung geht in Haftung, wobei kein Schlupf vorliegt. Der Motor wird dabei direkt an das Getriebe angekoppelt (1:1-Momentübertragung). So kann ein insbesondere dauerhafter Schlupf mit den damit einhergehenden Steuerungs-/Regelungsproblemen (beim Übergang vom Haften ins Reiben) bei einem Reibsystem in einem (veränderten) Sonderzustand und damit das im Zusammenhang mit Fig. 1 erläuterte Phänomen von "Rausdreher-Haftreibungs-Abfolgen" verringert beziehungsweise vermieden werden.

Fig. 6 veranschaulicht, dass im Rahmen einer weiteren Ausgestaltung der angepassten Steuerungs- und/oder Regelungsstrategie die Motordrehzahl 1 - insbesondere bei im Wesentlichen konstanter Getriebeeingangswellendrehzahl 2 - langsamer beziehungsweise mit einem betragsmäßig geringeren beziehungsweise flacheren, zeitlichen Gradienten als bei dem in Fig. 2 dargestellten Reibsystem im In-Ordnung-Zustand an den in Fig. 6 durch die gestrichelte Linie dargestellten Grenzwert 4 (für den Sollschlupf) herangezogen wird und damit auch der Ist-Schlupf langsamer beziehungsweise mit einem betragsmäßig geringeren beziehungsweise flacheren, zeitlichen Gradienten als bei einem Reibsystem im In-Ordnung-Zustand an den bestimmten Sollschlupf 4 herangeführt wird. Der zeitliche Gradient wird dabei insbesondere derart eingestellt, dass das Reibsystem nicht in Haftung geht. So kann vorteilhafterweise ebenfalls das im Zusammenhang mit Fig. 1 erläuterte Phänomen von "Rausdreher-Haftreibungs-Abfolgen" verringert beziehungsweise vermieden werden.

Abschließend darf nochmals darauf hingewiesen werden, dass die in den Fig. 4, 5 und 6 dargestellten Verfahrensschritte bei dem erfindungsgemäßen Verfahren einzeln oder auch in entsprechender Kombination (teils oder vollständig gemeinsam), insbesondere in einem Steuergerät abgespeichert sind bzw. sein können.

### Bezugszeichenliste

- 1: Motordrehzahl
- 2: Getriebeeingangswellendrehzahl
- 3: Grenzwert für maximal zulässigen Maximalschlupf
- 4: bestimmter Sollschlupf/Grenzwert für Sollschlupf
- 4*: erhöhter, bestimmter Sollschlupf
- Δt: bestimmter Mindest-Zeitraum
- Δt_{A}: bestimmter Analysezeitraum

## Patentansprüche

1. Verfahren zur Steuerung und/oder Regelung einer Kupplung mit einem Reibsystem, insbesondere einer Kupplung für ein automatisches oder automatisierbares Getriebe eines Kraftfahrzeugs, wobei ein Kupplungsmoment der Kupplung steuerbar und/oder regelbar ist und nach der Einstellung eines Kupplungsmomentes sich an der Kupplung zunächst ein Schlupf einstellt, wobei wenn eine Veränderung des Reibsystems erkannt wird, welche sich dadurch äußert, dass der Ist-Schlupf zunächst einen Grenzwert für einen maximal zulässigen Maximalschlupf (3) überschreitet und der Ist-Schlupf dann für einen bestimmten Mindest-Zeitraum (Δt) kleiner als ein bestimmter Sollschlupf (4) wird, eine an die Veränderung des Reibsystems angepasste Steuerungs- und/oder Regelungsstrategie aktiviert wird.

2. Verfahren nach Anspruch 1, **dadurch gekennzeichnet, dass** im Rahmen der angepassten Steuerungs- und/oder Regelungsstrategie der bestimmte Sollschlupf (4) erhöht wird.

3. Verfahren nach Anspruch 1 oder 2, **dadurch gekennzeichnet, dass** im Rahmen der angepassten Steuerungs- und/oder Regelungsstrategie für die Kupplung ein Haftungszustand realisiert wird, insbesondere die Kupplung in einer Überanpressung gefahren wird.

4. Verfahren nach einem der vorstehenden Ansprüche, **dadurch gekennzeichnet, dass** im Rahmen der angepassten Steuerungs- und/oder Regelungsstrategie der Ist-Schlupf an den bestimmten Sollschlupf (4) mit einem betragsmäßig verringerten zeitlichen Gradienten herangeführt wird.

5. Verfahren nach einem der vorstehenden Ansprüche, **dadurch gekennzeichnet, dass** im Rahmen der angepassten Steuerungs- und/oder Regelungsstrategie eine für die Veränderung des Reibsystems spezifische Reibwert-Schlupf-Kennlinie verwendet wird.

6. Verfahren nach Anspruch 5, **dadurch gekennzeichnet, dass** bei der spezifischen Reibwert-Schlupf-Kennlinie der Reibwert mit steigendem Schlupf abfällt.

7. Verfahren nach Anspruch 5 oder 6, **dadurch gekennzeichnet, dass** im Rahmen der angepassten Steuerungs- und/oder Regelungsstrategie der bestimmte Sollschlupf (4) derart erhöht wird, dass der erhöhte, bestimmte Sollschlupf (4*) in einem Bereich der spezifischen Reibwert-Schlupf-Kennlinie liegt, in welchem der Abfall des Reibwertes über Schlupf möglichst gering ist.

8. Verfahren nach einem der vorstehenden Ansprüche, **dadurch gekennzeichnet, dass** die Kupplung in einer Überanpressung gefahren wird, insbesondere dass die Kupplung auf ein Kupplungsmoment eingestellt wird, welches größer als das zu übertragende Drehmoment, insbesondere das Motormoment ist.

9. Verfahren nach Anspruch 8, **dadurch gekennzeichnet, dass** die Kupplung auf ein Kupplungsmoment eingestellt wird, welches um mindestens 50 % größer als das zu übertragende Drehmoment, insbesondere das Motormoment ist.

10. Verfahren nach einem der vorstehenden Ansprüche, **dadurch gekennzeichnet, dass** die angepasste Steuerungs- und/oder Regelungsstrategie nach einem bestimmten Anpassungszeitraum und/oder beim Erreichen einer bestimmten Temperatur und/oder ab einer bestimmten Leistung der Kupplung wieder deaktiviert wird.

11. Verfahren nach einem der vorstehenden Ansprüche, **dadurch gekennzeichnet, dass** wenn die Veränderung im Reibsystem erneut erkannt wird, die angepasste Steuerungs- und/oder Regelungsstrategie wieder aktiviert wird.

12. Verfahren nach einem der vorstehenden Ansprüche, **dadurch gekennzeichnet, dass** die Veränderung des Reibsystems erkannt wird, wenn der Ist-Schlupf zunächst den Grenzwert für einen maximal zulässigen Maximalschlupf (4) überschreitet und der Ist-Schlupf dann für den bestimmten Zeitraum (Δt) kleiner als der bestimmte Sollschlupf (4) wird und diese Sequenz beziehungsweise Periode zumindest zweifach erfolgt.

13. Verfahren nach Anspruch 12, **dadurch gekennzeichnet, dass** der Grenzwert für den maximal zulässigen Maximalschlupf (4) um ein mehrfaches größer als der bestimmte Sollschlupf (4) ist.

14. Verfahren nach Anspruch 12 oder 13, **dadurch gekennzeichnet, dass** in dem bestimmten Mindest-Zeitraum (Δt) der Ist-Schlupf gleich null wird.

15. Verfahren nach einem der vorstehenden Ansprüche, **dadurch gekennzeichnet, dass** das Verfahren zur Steuerung und/oder Regelung einer Doppelkupplung beziehungsweise eines Doppelkupplungsgetriebes für ein Kraftfahrzeug ausgelegt ist.

## Claims

1. A method for controlling and/or regulating a clutch with a friction system, in particular a clutch for an automatic or automatable transmission of a motor vehicle, wherein a clutch torque of the clutch can be controlled and/or regulated and, after the adjustment of a clutch torque, a slip initially arises at the clutch, wherein when a change in the friction system is detected, which is expressed in that the actual slip initially exceeds a limit value for a maximum permissible maximum slip (3) and the actual slip then becomes less than a particular setpoint slip (4) for a particular minimum time period (Δt), a control and/or regulation strategy adapted to the change in the friction system is activated.

2. The method according to Claim 1, **characterized in that** within the framework of the adapted control and/or regulation strategy, the particular setpoint slip (4) is increased.

3. The method according to Claim 1 or 2, **characterized in that** within the framework of the adapted control and/or regulation strategy, an adhesion state is realized for the clutch, the clutch is in particular driven with excessive contact pressure.

4. The method according to one of the preceding claims, **characterized in that** within the framework of the adapted control and/or regulation strategy, the actual slip is brought close to the particular setpoint slip (4) with a magnitudinally reduced temporal gradient.

5. The method according to one of the preceding claims, **characterized in that** within the framework of the adapted control and/or regulation strategy, a friction coefficient-slip characteristic curve specific to the change in the friction system is used.

6. The method according to Claim 5, **characterized in that** the friction coefficient in the specific friction coefficient-slip characteristic curve decreases with increasing slip.

7. The method according to Claim 5 or 6, **characterized in that** within the framework of the adapted control and/or regulation strategy, the particular setpoint slip (4) is increased in such a way that the increased, particular setpoint slip (4*) is in a range of the specific friction coefficient-slip characteristic curve, in which the decrease in the friction coefficient over the slip is as low as possible.

8. The method according to one of the preceding claims, **characterized in that** the clutch is driven with excessive contact pressure, in particular **in that** the clutch is adjusted to a clutch torque that is greater than the torque to be transmitted, in particular the engine torque.

9. The method according to Claim 8, **characterized in that** the clutch is adjusted to a clutch torque, which is at least 50% greater than the torque to be transmitted, in particular the engine torque.

10. The method according to one of the preceding claims, **characterized in that** the adapted control and/or regulation strategy is deactivated again after a particular adaptation time period and/or when a particular temperature is reached and/or from a particular power of the clutch.

11. The method according to one of the preceding claims, **characterized in that** the adapted control and/or regulation strategy is activated again when the change in the friction system is detected again.

12. The method according to one of the preceding claims, **characterized in that** the change in the friction system is detected when the actual slip initially exceeds the limit value for a maximum permissible maximum slip (4) and the actual slip is then less than the particular setpoint slip (4) for the particular time period (Δt) and this sequence or period takes place at least twice.

13. The method according to Claim 12, **characterized in that** the limit value for the maximum permissible maximum slip (4) is multiple times greater than the particular setpoint slip (4).

14. The method according to Claim 12 or 13, **characterized in that** the actual slip in the particular minimum time period (Δt) is equal to zero.

15. The method according to one of the preceding claims, **characterized in that** the method is designed for controlling and/or regulating a dual clutch or a dual clutch transmission for a motor vehicle.

## Revendications

1. Procédé de commande et/ou de régulation d'un embrayage comprenant un système de friction, en particulier d'un embrayage pour une boîte de vitesses automatique ou pouvant être automatisée d'un véhicule automobile, dans lequel un couple de l'embrayage peut être commandé et/ou régulé et, après le réglage d'un couple d'embrayage, un patinage se produit tout d'abord dans l'embrayage, dans lequel lorsqu'une modification du système de friction est détectée, laquelle s'exprime par le fait que le patinage réel passe tout d'abord en dessous d'une valeur limite pour un patinage maximal (3) admissible au maximum et le patinage réel est ensuite inférieur à un patinage de consigne (4) déterminé pendant une durée minimale (Δt) déterminée, une stratégie de commande et/ou de régulation adaptée à la modification du système de friction est activée.

2. Procédé selon la revendication 1, **caractérisé en ce que,** dans le cadre de la stratégie de commande et/ou de régulation adaptée, le patinage de consigne (4) déterminé est augmenté.

3. Procédé selon la revendication 1 ou 2, **caractérisé en ce que,** dans le cadre de la stratégie de commande et/ou de régulation adaptée pour l'embrayage, un état d'adhérence est réalisé, en particulier l'embrayage est exploité dans une surpression.

4. Procédé selon l'une quelconque des revendications précédentes, **caractérisé en ce que,** dans le cadre de la stratégie de commande et/ou de régulation adaptée, le patinage réel est introduit lors du patinage de consigne (4) déterminé avec un gradient temporel réduit en termes d'amplitude.

5. Procédé selon l'une quelconque des revendications précédentes, **caractérisé en ce que,** dans le cadre de la stratégie de commande et/ou de régulation adaptée, une courbe caractéristique valeur de friction-patinage spécifique pour la modification du système de friction est utilisée.

6. Procédé selon la revendication 5, **caractérisé en ce que,** pour la courbe caractéristique valeur de friction-patinage, la valeur de friction diminue lorsque le patinage augmente.

7. Procédé selon la revendication 5 ou 6, **caractérisé en ce que,** dans le cadre de la stratégie de commande et/ou de régulation adaptée, le patinage de consigne (4) déterminé est augmenté de sorte que le patinage de consigne (4*) déterminé augmenté se trouve dans une plage de la courbe caractéristique valeur de friction-patinage, dans laquelle la chute de la valeur de friction par rapport au patinage est la plus faible possible.

8. Procédé selon l'une quelconque des revendications précédentes, **caractérisé en ce que** l'embrayage est exploité dans une surpression, en particulier **en ce que** l'embrayage est réglé sur un couple d'embrayage qui est supérieur au couple de rotation à transmettre, en particulier au couple moteur.

9. Procédé selon la revendication 8, **caractérisé en ce que** l'embrayage est réglé sur un couple d'embrayage, qui est au moins 50 % supérieur au couple de rotation à transmettre, en particulier au couple moteur.

10. Procédé selon l'une quelconque des revendications précédentes, **caractérisé en ce que** la stratégie de commande et/ou de régulation adaptée est de nouveau désactivée après une période d'adaptation déterminée et/ou lorsqu'une température déterminée est atteinte et/ou à partir d'une puissance déterminée de l'embrayage.

11. Procédé selon l'une quelconque des revendications précédentes, **caractérisé en ce que** lorsque la modification dans le système de friction est de nouveau reconnue, la stratégie de commande et/ou de régulation adaptée est de nouveau activée.

12. Procédé selon l'une quelconque des revendications précédentes, **caractérisé en ce que** la modification du système de friction est reconnue lorsque le patinage réel dépasse d'abord la valeur limite pour un patinage maximal (4) admissible au maximum et le patinage réel est ensuite inférieur à un patinage de consigne (4) déterminé pendant la durée déterminée (Δt) et que cette séquence ou période se produit au moins deux fois.

13. Procédé selon la revendication 12, **caractérisé en ce que** la valeur limite pour le patinage maximal (4) admissible au maximum est de multiple fois supérieure au patinage de consigne (4) déterminé.

14. Procédé selon la revendication 12 ou 13, **caractérisé en ce que** dans la durée minimale (Δt) déterminée, le patinage réel est égal à zéro.

15. Procédé selon l'une quelconque des revendications précédentes, **caractérisé en ce que** le procédé de commande et/ou de régulation est appliqué à un embrayage double ou une boîte de vitesses à embrayage double pour un véhicule automobile.
